Europäisches Patentamt

European Patent Office

Office européen des brevets

(19)

(11) **EP 1 204 817 B1**

(12) **EUROPÄISCHE PATENTSCHRIFT**

(45) Veröffentlichungstag und Bekanntmachung des Hinweises auf die Patenterteilung:
**03.08.2005   Patentblatt 2005/31**

(21) Anmeldenummer: **00979389.4**

(22) Anmeldetag: **26.09.2000**

(51) Int Cl.[7]: **F01N 11/00**

(86) Internationale Anmeldenummer:
**PCT/DE2000/003338**

(87) Internationale Veröffentlichungsnummer:
**WO 2001/033052 (10.05.2001 Gazette 2001/19)**

(54) **VERFAHREN ZUR ÜBERWACHUNG EINES SEKUNDÄRLUFTSYSTEMS IN VERBINDUNG MIT DEM ABGASSYSTEM EINES KRAFTFAHRZEUGS**

METHOD FOR MONITORING A SECONDARY AIR SYSTEM ASSOCIATED WITH THE EXHAUST SYSTEM OF A VEHICLE

PROCEDE DE SURVEILLANCE D'UN SYSTEME D'APPORT D'AIR SECONDAIRE EN ASSOCIATION AVEC LE SYSTEME D'ECHAPPEMENT D'UN VEHICULE A MOTEUR

(84) Benannte Vertragsstaaten:
**DE FR IT SE**

(30) Priorität: **03.11.1999  DE 19952836**

(43) Veröffentlichungstag der Anmeldung:
**15.05.2002   Patentblatt 2002/20**

(73) Patentinhaber: **ROBERT BOSCH GMBH**
**70442 Stuttgart (DE)**

(72) Erfinder:
• **TULEWEIT, Wilfried**
**D-71701 Schwieberdingen (DE)**

• **LANGE, Joerg**
**D-71735 Eberdingen (DE)**
• **HIRSCHMANN, Klaus**
**D-71229 Leonberg (DE)**

(74) Vertreter: **Jakelski, Joachim, Dr.**
**Otte & Jakelski Patentanwälte**
**Mollenbachstrasse 37**
**71229 Leonberg (DE)**

(56) Entgegenhaltungen:
**DE-A- 4 343 639        FR-A- 2 726 031**

**Beschreibung**

<u>Stand der Technik</u>

Die Erfindung betrifft ein Verfahren zur Überwachung eines Sekundärluftsystem in Verbindung mit dem Abgassystem eines Kraftfahrzeugs.

Ein derartiges Verfahren und eine Vorrichtung zur Durchführung des Verfahrens sind beispielsweise aus der DE 43 43 639 A1 bekannt. Durch dieses bekannte Verfahren kann die Funktionsfähigkeit des Sekundärluftsystems zwar geprüft werden, es ist jedoch nicht möglich, die dem Abgassystem des Kraftfahrzeugs tatsächlich zugeführte Sekundärluftmasse zu bestimmen. Im Zuge der von den amerikanischen Behörden vorgeschriebenen On-Board-Diagnose (OBD), müssen alle emissionsrelevanten Komponenten und Systeme von Steuerungen für Brennkraftmaschinen diagnostiziert werden können. Dabei wird auch die quantitative Bestimmung der tatsächlichen Sekundärluftmasse erforderlich.

Der Erfindung liegt die Aufgabe zugrunde, ein Verfahren zur Überwachung eines Sekundärluftsystems in Verbindung mit dem Abgassystem eines Kraftfahrzeugs der gattungsgemäßen Art dahingehend weiterzubilden, dass die dem Abgassystem tatsächlich zugeführte Sekundärluftmasse bestimmbar ist, ohne dass ein zusätzlicher Sensor, beispielsweise ein Luftmassenmesser o.dgl., erforderlich ist.

Diese Aufgabe wird durch die Merkmale des Anspruchs 1 gelöst. Vorteilhafte Ausgestaltungen des Verfahrens sind Gegenstand der Unteransprüche.

<u>Vorteile der Erfindung</u>

Bei dem erfindungsgemäßen Verfahren wird die Funktionsfähigkeit des Sekundärluftsystems anhand des rechnerisch ermittelten Sekundärluftstroms beurteilt. Ein Vorteil der Erfindung besteht darin, dass die Sekundärluftmasse ohne zusätzlichen Sensor ermittelt werden kann, da die zu ihrer Bestimmung benötigten Signale entweder ohnehin zur Verfügung stehen oder aus ohnehin zur Verfügung stehenden Signalen gebildet werden können.

Dabei kann die Sekundärluftmasse sowohl bei einer stetigen $\ell$-Sonde als auch bei einer Zweipunkt-$\ell$-Sonde ermittelt werden.

Eine Ventildichtheitsprüfung des Sekundärluftabschaltventils und eine Offsetmessung zur Bestimmung des Sekundärluftmassen-Offsets bei ausgeschalteter Sekundärluftpumpe sind Gegenstand vorteilhafter Weiterbildungen des Verfahrens.

Um Fehlfunktionen während der Messphasen auszuschließen, erfolgt die Diagnose in einem vorgegebenen Luftmassen- und Motortemperaturfenster. Instationäreinflüsse werden durch Ausblenden und eine Tiefpassfilterung der Messergebnisse weitestgehend eliminiert.

<u>Zeichnung</u>

Die Erfindung wird nachstehend anhand der in der Zeichnung dargestellten Ausführungsbeispiele erläutert.

Es zeigen:

Fig. 1    eine aus dem Stand der Technik bekannte schematische Darstellung einer Brennkraftmaschine mit einem Sekundärluftsystem, das mittels dem erfindungsgemäßen Verfahren überwacht wird;

Fig. 2    ein Flussdiagramm einer Ausführungsform des erfindungsgemäßen Verfahrens und

Fig. 3    ein Flussdiagramm einer weiteren Ausführungsform des erfindungsgemäßen Verfahrens.

<u>Beschreibung der Ausführungsbeispiele</u>

Um den Katalysator im Abgaskanal einer Brennkraftmaschine möglichst schnell auf Betriebstemperatur zu bringen, kann man in den Abgaskanal zwischen Brennkraftmaschine und Katalysator Frischluft einblasen. Auf diese Weise entsteht eine exotherme Reaktion zwischen dem Abgas und der eingeblasenen Frischluft im Abgaskanal und/oder im Katalysator, wodurch es zu einer beschleunigten Aufheizung des Katalysators kommt. Im Sinne einer möglichst geringen Schadstoffemission wird angestrebt, den Katalysator möglichst schnell auf seine Betriebstemperatur aufzuheizen. Deshalb ist es wichtig, dass das Sekundärluftsystem, das die Frischluft in den Abgaskanal einbläst, ordnungsgemäß arbeitet. Grundidee der vorliegenden Erfindung ist es, die Funktionsfähigkeit des Sekundärluftsystems anhand des vom Sekundärluftsystem erzeugten Luftmassenstroms zu beurteilen. Dabei wird auf einen Sensor zur Erfassung des Sekundärluftstroms verzichtet. Vielmehr wird die tatsächliche oder Ist-Sekundärluftmasse aus ohnehin bekannten Größen auf die nachfolgend beschriebene Weise ermittelt.

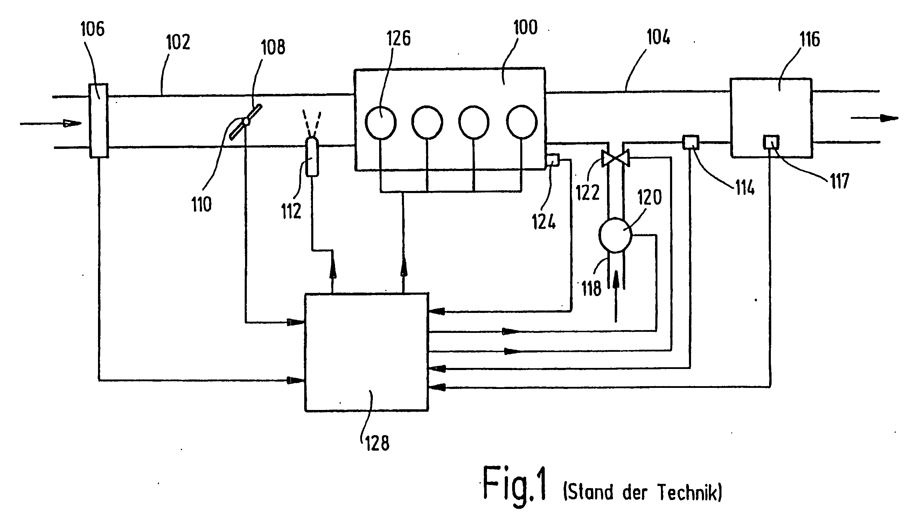

Fig. 1 zeigt eine Brennkraftmaschine 100, die mit einem Sekundärluftsystem ausgestattet ist. Über einen Ansaugtrakt 102 wird der Brennkraftmaschine 100 ein Luft/Kraftstoff-Gemisch zugeführt, die Abgase werden in einen Abgaskanal 104 abgegeben. Im Ansaugtrakt 102 sind - in Stromrichtung der angesaugten Luft gesehen - ein Luftmengenmesser oder Luftmassenmesser 106, beispielsweise ein Heissfilm-Luftmassenmesser, eine Drosselklappe 108 mit einem Sensor 110 zur Erfassung des Öffnungswinkels der Drosselklappe 108 und wenigstens eine Einspritzdüse 112 angeordnet. Im Abgaskanal 104 sind - in Stromrichtung des Abgases gesehen - ein Sauerstoffsensor 114 und ein Katalysator 116 mit einem Temperatursensor 117 angeordnet. Stromaufwärts des Sauerstoffsensors 114 mündet eine Sekundärluftleitung 118 in den Abgaskanal 104. Durch die Sekundärluftleitung 118 kann mittels einer Sekundärluftpumpe 120 Frischluft in den Abgaskanal 104 eingeblasen werden. Zwischen der Sekundärluftpumpe 120 und der Einmündung der Sekundärluftleitung 118 in den Abgaskanal 104 ist ein Ventil 122 angeordnet. Das Ventil 122 ist beispielsweise erforderlich, um den Abgaskanal 104 bei ausgeschalteter Sekundärluftpumpe 120 abzudichten. Weiterhin kann das Ventil 122 dazu verwendet werden, den Sekundärluftstrom zu beeinflussen.

An der Brennkraftmaschine 100 ist ein Drehzahlsensor 124 vorgesehen. Weiterhin besitzt die Brennkraftmaschine 100 beispielsweise vier Zündkerzen 126 zur Zündung des Luft/Kraftstoff-Gemisches in den Zylindern. Die Ausgangssignale des Luftmengenmessers oder Luftmassenmessers 106, des Sensors 110 zur Erfassung des Öffnungswinkels der Drosselklappe 108, des Sauerstoffsensors 114, des Temperatursensors 117 und des Drehzahlsensors 124 werden einem zentralen Steuergerät 128 über entsprechende Verbindungsleitungen zugeführt. Das zentrale Steuergerät 128 wertet die Sensorsignale aus und steuert über weitere Verbindungsleitungen die Einspritzdüse bzw. die Einspritzdüsen 112, die Sekundärluftpumpe 120, das Ventil 122 und die Zündkerzen 126 an.

Bei Einsatz eines stetigen Sauerstoffsensors (λ-Sonde) 114 kann die Sekundärluftverdünnung während der Sekundärluftphase, d.h. während der Zeit, während der Sekundärluft in den Abgaskanal 104 eingeblasen wird, aus dem von dem Sauerstoffsensor 114 gemessenen Sondensignal $\lambda_{Abgas}$ direkt ermittelt werden. Eine Umrechnung auf die tatsächliche Sekundärluftmasse kann gemäß der nachfolgenden Formel bei bekannter Ansaugluftmasse $Masse_{Ansaugluft}$ und bekanntem Verhältnis von Ansaugstrom zu pro Zeit zugemessenem Kraftstoff (Anfettung) $\lambda_{Motor}$ erfolgen:

$$\lambda_{Abgas} = \lambda_{Motor} * (1 + Masse_{Sekundärluft} / Masse_{Ansaugluft}))$$

Eine Diagnose erfolgt in diesem Zusammenhang durch Vergleich mit einer vorgegebenen Sekundärluftmassenschwelle.

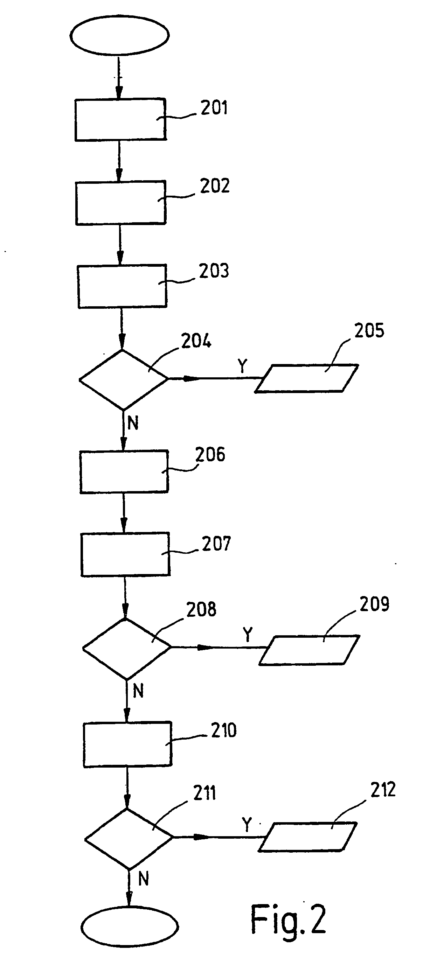

In Fig. 2 ist schematisch ein Ausführungsbeispiel eines Verfahrens zur Überwachung der Funktionsfähigkeit des Sekundärluftsystems dargestellt:

Es wird in einem Schritt 201 die Ansaugluftmasse $Masse_{Ansaugluft}$ durch den Luftmengenmesser oder Luftmassenmesser 106 erfasst.

Sodann wird in einem Schritt 202 beispielsweise aus einer Kennlinienschar die zuvor ermittelte Soll-Sekundärluftmasse $Masse_{Sekundärluft\ Soll}$ bestimmt und in Schritt 203 die Stellgröße des stetigen λ-Reglers ermittelt. Die Lambdaregelung stellt einen mittleren Regelfaktor $FR_m$ zur Verfügung.

Die Ist-Sekundärluftmasse oder tatsächlich eingeblasene Sekundärluftmasse $Masse_{Sekundärluft\ Ist}$ wird in Schritt 204 gemäß folgender Formel ermittelt:

$$Masse_{Sekundärluft\ Ist} = [(\lambda_{Abgas} / \lambda_{Abgas\ Soll} * FR_m) - 1] *$$

$$Masse_{Ansaugluft},$$

wobei $\lambda_{Abgas\ Soll}$ ein berechneter Sollwert der λ-Regelung ist.

Darauf erfolgt im Anschluss an die Sekundärluftphase zunächst eine Ventildichtsheitsprüfung. Hierzu wird in einem Schritt 206 zunächst das Ventil 122 geschlossen. Die Sekundärluftpumpe 120 arbeitet in diesem Falle dann gegen das geschlossene Ventil 122. Eine Undichtheit dieses Ventils 122 führt dennoch zu einer Sekundärlufteinblasung in den Abgaskanal 104, die ebenfalls aus der Stellgröße $FR_m$ des λ-Reglers gemäß obenstehender Formel bestimmbar ist. In diesem Falle wird als Soll-Sekundärluftmasse $Masse_{Sekundärluft\ Soll}$ der Wert Null angenommen, woraus sich ergibt:

$$Masse_{Sekundärluftventil} = Masse_{Ansaugluft} \times (FR_m - 1),$$

In Schritt 207 wird die $Masse_{Sekundärluftventil}$ gemäß dieser Formel rechnerisch ermittelt.

Durch die aktive Sekundärluftpumpe 120 entsteht bei Ventilundichtheit ein höherer Luftmassenstrom als bei einem reinen Selbstsaugeffekt des undichten Ventils. Die Ventilprüfung ist allerdings nur bei solchen Ventilen möglich, die nicht durch den von der Sekundärluftpumpe 120 erzeugten Druck geöffnet werden.

Im Anschluss an die Ventildichtheitsprüfung erfolgt sodann eine Bestimmung des Sekundärluftmassen-Offsets, der entsprechend der Ventildichtheitsprüfung erfolgt, da die Stellgröße $FR_m$ des λ-Reglers während der Sekundärluftphase nicht nur von der tatsächlichen Sekundärluftmasse $Masse_{Sekundärluft\,Ist}$ abhängt, sondern auch direkt von $λ_{Motor}$ und der Kraftstoffzumessung. Eine nicht eingeschwungene Kraftstoffadaption würde demzufolge als Sekundärluftmasse interpretiert. Aus diesen Gründen erfolgt im Anschluss an die Ventildichtheitsprüfung eine Nullpunktbestimmung als Sekundärluftmassen-Offset, nachdem auch die Sekundärluftpumpe 120 abgeschaltet und die Sekundärluft aus dem Abgaskanal 104 entfernt ist. Auf diesen Sekundärluftmassen-Offset werden die oben in Schritt 203 und Schritt 207 bestimmten Sekundärluftmassen bezogen (Schritt 210).

Um ein Fehlverhalten während der Messphasen auszuschließen, erfolgen die Messungen nur in einem vorgegebenen Luftmassen- und Motortemperaturfenster. Einflüsse aufgrund Instationärverhaltens werden zusätzlich durch eine Tiefpass(PT1-)Filterung der Messergebnisse eliminiert.

Die Diagnose erfolgt nun auf folgende Weise:

Eine unzureichend eingeblasene Sekundärluftmasse wird erkannt, wenn die ermittelte Ist-Sekundärluftmasse $Masse_{Sekundärluft\,Ist}$ eine vorgegebene Schwelle unterschreitet (Schritt 204). Ist dies der Fall, wird eine Fehlermeldung ausgegeben (Schritt 205) oder abgespeichert.

Ein undichtes Sekundärluftabschaltventil 122 wird erkannt, wenn die Sekundärluftventilmasse $Masse_{Sekundärluftventil}$ eine vorgegebene Schwelle überschreitet. Es wird daher in Schritt 208 $Masse_{Sekundärluft}$ mit der Schwelle verglichen. Bei Überschreiten der Schwelle wird wiederum eine Fehlermeldung ausgegeben (Schritt 209) oder abgespeichert.

Wird der Offset-Betrag bei der Bestimmung des Sekundärluftmassen-Offsets als übermäßig groß erkannt, das heisst, überschreitet er einen weiteren vorgegebenen Schwellenwert, was in Schritt 211 überprüft wird, liegt ebenfalls ein Fehler vor, der in Schritt 212 ausgegeben oder abgespeichert wird. Die Zuordnung ist allerdings nicht eindeutig, da ein undichtes Sekundärluftventil 122, sonstige Undichtigkeiten im Ansaugtrakt 102 oder im Abgaskanal 104, aber auch ein Fehler der Kraftstoffversorgung vorliegen können.

Eine vorteilhafte Ausführungsform des oben beschriebenen Verfahrens sieht vor, dass bei Vorgabe der Motoranfettung in Abhängigkeit von der Sekundärluftmasse die ermittelte tatsächliche Sekundärluftmasse oder Ist-Sekundärluftmasse $Masse_{Sekundärluft\,Ist}$ zur Adaption der angenommenen Sekundärluftmasse $Masse_{Sekundärluft\,Soll}$ verwendet werden kann. Auf diese Weise ist eine wesentlich verbesserte Steuerung der Brennkraftmaschine in Verbindung mit Sekundärluft möglich, bei der die Sekundärlufttoleranzen durch Anpassung der Anfettung der Brennkraftmaschine ausgeglichen werden können. Bei Brennkraftmaschinen mit variabler Sekundärluftmasse ist dagegen die direkte Korrektur der Sekundärluftmasse möglich.

Ein großer Vorteil des oben beschriebenen Verfahrens ist es auch, dass durch die Verwendung der stetigen λ-Sonde eine quantitative Diagnose der Sekundärluftmasse ohne Abgasnachteile bereits während der Sekundärluftphase möglich ist. Ein zusätzliches Einschalten des Sekundärluftsystems zu Diagnosezwecken, wie es aus dem Stand der Technik bekannt ist, ist nicht erforderlich.

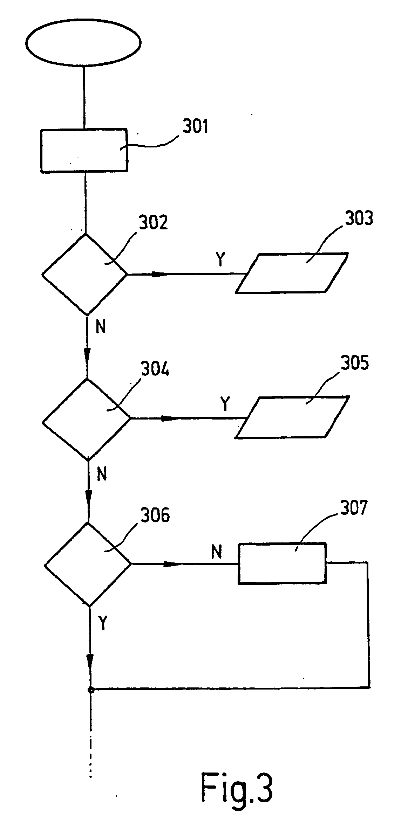

Nachfolgend wird in Verbindung mit Fig. 3 die Bestimmung der tatsächlichen oder Ist-Sekundärluftmasse $Masse_{Sekundärluft\,Ist}$ bei einer Zweipunkt-λ-Regelung beschrieben.

Zunächst werden wie oben (Schritte 201 bis 203) beschrieben, die Ansaugluftmasse ($Masse_{Ansaugluft}$), die Soll-Sekundärluftmasse (($Masse_{Sekundärluftsoll}$) und die Sollgröße $FR_m$ des λ-Reglers ermittelt. Ferner wird zunächst $λ_{Abgas}$ soll als Verhältnis von Ansaugluftstrom zu pro Zeit zugemessenem Kraftstoff auf an sich bekannte Weise rechnerisch bestimmt.

Während der Sekundärluftphase wird die λ-Regelung dabei im sogenannten "Fett-Schutz-Modus" betrieben, das bedeutet, dass die Stellgröße $FR_m$ auf 1 begrenzt ist. Die λ-Regelung darf mit anderen Worten, trotz magerem Sondensignal der Sauerstoffsonde 114 das Luft/Kraftstoff-Verhältnis nicht anfetten, sondern nur abmagern. Die λ-Regelung darf anders ausgedrückt die Sekundärluftverdünnung nicht "wegregeln". Wenn die Sauerstoffsonde 114 dagegen ein fettes Luft/Kraftstoff-Verhältnis erkennt, wird zumindest auf λ = 1 im Abgas geregelt. Die hieraus resultierende Stellgröße des λ-Reglers $FR_m < 1$ dient in diesem Falle dazu, die Ist-Sekundärluftmasse $Luft_{Sekundärluft\,Ist}$ gemäß folgender Gleichung rechnerisch zu bestimmen (Schritt 301):

$$Masse_{Sekundärluft\,Ist} = FR_m * 1 / λ_{Abgas\,Soll} * (Masse_{Ansaugluft} +$$

$$Masse_{Sekundärluft\,Soll}) - Masse_{Ansaugluft}.$$

Die Ist-Sekundärluftmasse wird dabei in einem vorgegebenen Luftmassen- und Temperaturfenster bestimmt und mittels eines Tiefpass(PT1)-Filters gefiltert, um instationäre Effekte auszuschalten. Sofern das rechnerisch ermittelte Verhältnis von Ansaugluftstrom zu pro Zeit zugemessenem Kraftstoff $\lambda_{Abgas\ Soll}$ nicht bekannt ist, kann die Ist-Sekundärluftmasse gemäß folgender Gleichung bestimmt werden:

$$Masse_{Sekundärluft\ Ist} = FR_m/\lambda_{Abgas\ Soll} * (Masse_{Ansaugluft} + Masse_{Sekundärluft\ Soll}) - Masse_{Ansaugluft}.$$

Alternativ hierzu kann die Ist-Sekundärluftmasse auch aus der Stellgröße $FR_m < 1$ des $\lambda$-Reglers durch eine Zeitmessung oder eine Integration gebildet werden.

Die Diagnose erfolgt hierbei durch einen Vergleich mit vorgegebenen Sekundärluftschwellen:
In Schritt 306 wird überprüft, ob die Ist-Sekundärluftmasse oberhalb einer dritten Schwelle liegt. Ist dies der Fall, arbeitet das System ordnungsgemäß, da genug Sekundärluft eingeblasen wird (die $\lambda$-Regelung musste nur vernachlässigbar abmagern).

Liegt die Ist-Sekundärluftmasse unterhalb einer ersten Schwelle (Schritt 302), konnte überhaupt keine Sekundärluft eingebracht werden. Dies bedeutet, dass das Sekundärluftventil nicht geöffnet war oder der Sekundärluftkanal verstopft war. Es wird eine Fehlermeldung ausgegeben (Schritt 303) oder abgespeichert.

Liegt die Ist-Sekundärluftmasse dagegen unterhalb einer zweiten Schwelle, was in Schritt 304 überprüft wird, wurde nicht genug Sekundärluft eingeblasen. Durch das geöffnete Ventil 122 erfolgte eine Selbstsaugung und es wurde eine Sekundärluftverdünnung ermittelt. Hieraus lässt sich ableiten, dass die Sekundärluftpumpe 120 keinen ausreichenden Luftstrom lieferte, das Ventil 122 jedoch geöffnet war. Dies führt zu einer Fehlermeldung (Schritt 305) oder zur Speicherung eines Fehlereintrags.

Liegt die Ist-Sekundärluftmasse dagegen zwischen der ersten und der zweiten Schwelle, kann eine Sekundäradaption (Schritt 307) durchgeführt werden, bei der oberhalb eine Ansaugluftmassenschwelle auf $\lambda = 1$ im Abgas geregelt wird. Diese Adaptionsphase wird so konfiguriert, dass sie während der eigentlichen Sekundärlufteinblasung erfolgt, die Sekundärluftphase verlängert wird oder später bei betriebswarmem Motor durch erneutes Ansteuern des Sekundärluftsystems durchgeführt wird. Während dieser Adaptionsphase erfolgt die Ermittlung der tatsächlichen Sekundärluftmasse gemäß folgender Gleichung:

$$Masse_{Sekundärluft\ Ist} = FR_m * (Masse_{Ansaugluft} + Masse_{Sekundärluft\ Soll}) - Masse_{Ansaugluft}.$$

Im Anschluss an die Sekundärluftphase wird daraufhin zunächst eine Ventildichtheitsprüfung (siehe oben Schritte 206 bis 209) und daraufhin eine Offsetmessung (siehe oben Schritte 210 bis 212) wie oben beschrieben durchgeführt.

**Patentansprüche**

1. Verfahren zur Überwachung eines Sekundärluftsystems in Verbindung mit dem Abgassystem eines Kraftfahrzeugs, wobei

   - ein Signal für den Sekundärluftstrom ermittelt wird, aus
   - einem Signal für den Ansaugluftstrom ($Masse_{Ansaugluft}$),
   - einem Signal für das rechnerisch ermittelte Verhältnis von Ansaugluftstrom zu pro Zeit zugemessenem Kraftstoff ($\lambda_{Motor}$),
   - einem Signal für das mittels einer Sonde ermittelte Luft/Kraftstoff-Verhältnis ($\lambda_{Abgas}$) stromabwärts der Einmündung einer Sekundärluftleitung in den Abgaskanal und wobei die Funktionsfähigkeit des Sekundärluftsystems anhand des Signals für den Sekundärluftstrom beurteilt wird, und
   - als Signal für den Sekundärluftstrom die Sekundärluftmasse ($Masse_{Sekundärluft}$) in Abhängigkeit von dem Verhältnis von Ansaugluftstrom zu pro Zeit zugemessenem Kraftstoff ($\lambda_{Motor}$) und von dem von der Sonde ermittelten Luft/Kraftstoff-Verhältnis ($\lambda_{Abgas}$) sowie von dem Signal für den Ansaugluftstrom ($Masse_{Ansaugluft}$) rechnerisch ermittelt und die Funktionsfähigkeit in Abhängigkeit von dieser Sekundärluftmasse ($Masse_{Sekundärluft}$) beurteilt wird,

**dadurch gekennzeichnet, dass**

- die Sekundärluftmasse während der Sekundärluftphase ermittelt wird, wobei die Sekundärluft-Istmasse ($\text{Masse}_{\text{Sekundärluft Ist}}$) in Abhängigkeit von einer Stellgröße ($FR_m$) eines $\lambda$-Reglers bestimmt wird.

2. Verfahren nach Anspruch 1, **dadurch gekennzeichnet, dass** die Sekundärluftmasse ($\text{Masse}_{\text{Sekundärluft}}$) gemäß folgender Gleichung rechnerisch ermittelt wird:

$$\lambda_{\text{Abgas}} = \lambda_{\text{Motor}} * (1 + (\text{Masse}_{\text{Sekundärluft}} / \text{Masse}_{\text{Ansaugluft}})).$$

3. Verfahren nach Anspruch 2, **dadurch gekennzeichnet, dass** das Sekundärluftsystem als funktionsfähig beurteilt wird, wenn die Sekundärluftmasse einen vorgegebenen Schwellenwert überschreitet.

4. Verfahren nach Anspruch 1, **dadurch gekennzeichnet, daß** die Sekundärluft-Istmasse ($\text{Masse}_{\text{Sekundärluft Ist}}$) gemäß folgender Gleichung bestimmt wird:

$$\text{Masse}_{\text{Sekundärluft Ist}} = [(\lambda_{\text{Abgas}}/\lambda_{\text{Abgas Soll}} * FR_m) - 1] *$$

$$\text{Masse}_{\text{Ansaugluft}},$$

wobei $\lambda_{\text{Abgas Soll}}$ das einzustellende Luft-Kraftstoffverhältnis ist.

5. Verfahren nach Anspruch 1 oder 4, **dadurch gekennzeichnet, dass** die Sekundärluft-Istmasse ($\text{Masse}_{\text{Sekundärluft Ist}}$) bei vorgegebenem Verhältnis von Ansaugluftstrom zu pro Zeit zugemessenem Kraftstoff ($\lambda_{\text{Motor}}$) zur Adaption der aufgrund eines Modells ermittelten Sekundärluft-Sollmasse ($\text{Masse}_{\text{Sekundärluft Soll}}$) verwendet wird.

6. Verfahren nach Anspruch 1, **dadurch gekennzeichnet, dass** die Sekundärluft-Istmasse ($\text{Masse}_{\text{Sekundärluft Ist}}$) in Abhängigkeit von der durch das Modell zu ermittelnden Sekundärluft-Sollmasse ($\text{Masse}_{\text{Sekundärluft Soll}}$) und von dem Sollwert eines rechnerisch ermittelten Verhältnisses von Ansaugluftstrom zu pro Zeit zugemessenem Kraftstoff ($\lambda_{\text{Abgas Soll}}$) berechnet wird, wobei die Stellgröße ($FR_m$) auf 1 begrenzt ist.

7. Verfahren nach Anspruch 5 oder 6, **dadurch gekennzeichnet, dass** die Sekundärluft-Istmasse ($\text{Masse}_{\text{Sekundärluft Ist}}$) gemäß folgender Gleichung berechnet wird:

$$\text{Masse}_{\text{Sekundärluft Ist}} = FR_m * 1 / \lambda_{\text{Abgas Soll}} * (\text{Masse}_{\text{Ansaugluft}} +$$

$$\text{Masse}_{\text{Sekundärluft Soll}}) - \text{Masse}_{\text{Ansaugluft}}.$$

8. Verfahren nach einem der Ansprüche 1 bis 7, **dadurch gekennzeichnet, dass** im Anschluss an die Sekundärluftphase bei geschlossenem Sekundärluftabschaltventil (122) und eingeschalteter Sekundärluftpumpe (120) die Sekundärluftmasse gemäß nachstehender Formel rechnerisch ermittelt und die Funktionsfähigkeit des Sekundärluftabschaltventils (122) anhand der so ermittelten Sekundärluftmasse beurteilt wird:

$$\text{Masse}_{\text{Sekundärluftventil}} = \text{Masse}_{\text{Ansaugluft}} * (FR_m - 1).$$

9. Verfahren nach Anspruch 8, **dadurch gekennzeichnet, dass** das Sekundärluftabschaltventil (122) dann als undicht beurteilt wird, wenn die Sekundärluftmasse ($\text{Masse}_{\text{Sekundärluftventil}}$) eine vorgegebene Schwelle überschreitet.

10. Verfahren nach Anspruch 9, **dadurch gekennzeichnet, dass** im Anschluss an die Ventildichtheitsprüfung eine Bestimmung des Sekundärluftmassen-Offsets **dadurch** erfolgt, dass die Sekundärluftpumpe (120) abgeschaltet und nach einem vorgebbaren Zeitintervall die Sekundärluftmasse bestimmt wird und diese als Offsetsignal gewertet und beurteilt wird.

**11.** Verfahren nach Anspruch 10, **dadurch gekennzeichnet, dass** ein Fehlersignal ausgegeben wird, wenn die als Offset ermittelte Sekundärluftmasse einen vorgegebenen Schwellwert überschreitet.

**12.** Verfahren nach einem der Ansprüche 1 bis 11, **dadurch gekennzeichnet, dass** die Ermittlung der Ansaugluftmasse ($Masse_{Ansaugluft}$) und das von der Sonde erfasste Luft/Kraftstoff-Verhältnis ($\lambda_{Abgas}$) in einem vorgebbaren Luftmassen- und Temperaturbereich der Brennkraftmaschine erfolgen.

**13.** Verfahren nach Anspruch 12, **dadurch gekennzeichnet, daß** die Meßwerte tiefpassgefiltert werden.

**Claims**

**1.** Method for monitoring a secondary air system associated with the exhaust system of a motor vehicle, wherein

- a signal is determined for the secondary air flow from
- a signal for the intake air flow ($mass_{intakeair}$),
- a signal for the computationally determined ratio of the intake air flow to the fuel ($\lambda_{engine}$), metered per time unit,
- a signal for the air/fuel ratio ($\lambda_{exhgas}$) determined by means of a probe downstream of the point where a secondary air line opens into the exhaust gas duct, and wherein the functional capability of the secondary air system is evaluated by means of the signal for the secondary air flow, and
- the secondary air mass flow rate ($mass_{secondaryair}$) is determined computationally as a signal for the secondary air flow as a function of the ratio of the intake air flow to the fuel ($\lambda_{engine}$) metered per time unit and of the fuel/air ratio ($\lambda_{exhgas}$) determined by the probe and of the signal for the intake air flow ($mass_{intakeair}$), and the functional capability is evaluated as a function of this secondary air mass flow rate ($mass_{secondaryair}$),

**characterized in that**

- the secondary air mass flow rate is determined during the secondary air phase, with the secondary air actual mass flow rate ($mass_{secondaryair\ actual}$) being determined as a function of a manipulated variable ($FR_m$) of a $\lambda$ controller.

**2.** Method according to Claim 1, **characterized in that** the secondary air mass flow rate ($mass_{secondaryair}$) is determined computationally according to the following equation:

$$\lambda_{exhgas} = \lambda_{engine} * (1 + (mass_{secondaryair}/mass_{intakeair})).$$

**3.** Method according to Claim 2, **characterized in that** the secondary air system is evaluated as being functionally capable if the secondary air mass flow rate exceeds a predefined threshold value.

**4.** Method according to Claim 1, **characterized in that** the secondary air actual mass flow rate ($mass_{secondaryair\ actual}$) is determined according to the following equation:

$$mass_{secondaryair\ actual} = [(\lambda_{exhgas}/\lambda_{exhgas\ setp} * FR_m) - 1] *$$

$$mass_{intakeair},$$

where $\lambda_{exhgas\ setp}$ is the air/fuel ratio to be set.

**5.** Method according to Claim 1 or 4, **characterized in that** the secondary air actual mass flow rate ($mass_{secondaryair\ actual}$) is used, given a predefined ratio of intake air flow to fuel ($\lambda_{engine}$) metered per time unit, to adapt the secondary air setpoint mass flow rate ($mass_{secondaryair\ setp}$) determined on the basis of a model.

**6.** Method according to Claim 1, **characterized in that** the secondary air actual mass flow rate ($mass_{secondaryair\ actual}$) is calculated as a function of the secondary air setpoint mass flow rate ($mass_{secondaryair\ setp}$) to be determined by means of the model and of the setpoint value of a computationally determined ratio of the intake air flow to the fuel ($\lambda_{exhgas\ setp}$) metered per time unit, with the manipulated variable ($FR_m$) being limited to 1.

**7.** Method according to Claim 5 or 6, **characterized in that** the secondary air actual mass flow rate ($mass_{secondaryair\ actual}$) is calculated according to the following equation:

$$mass_{secondaryair\ actual} = FR_m * 1/\lambda_{exhgas\ setp} * (mass_{intakeair} +$$

$$mass_{secondaryair\ setp}) - mass_{intakeair}.$$

**8.** Method according to one of Claims 1 to 7, **characterized in that**, when the secondary air deactivation valve (122) is closed and the secondary air pump (120) is switched on, the secondary air mass flow rate is determined computationally according to the following formula after the secondary air phase, and the functional capability of the secondary air deactivation valve (122) is evaluated by means of the secondary air mass flow rate which is determined in this way:

$$mass_{secondaryairvalve} = mass_{intakeair} * (FR_m - 1).$$

**9.** Method according to Claim 8, **characterized in that** the secondary air deactivation valve (122) is evaluated as not being sealed if the secondary air mass flow rate ($mass_{secondaryair\ valve}$) exceeds a predefined threshold.

**10.** Method according to Claim 9, **characterized in that**, after the valve seal test, the secondary air mass flow rate offset is determined by deactivating the secondary air pump (120) and determining the secondary air mass flow rate after a predefinable time interval and assessing and evaluating said secondary air mass flow rate as an offset signal.

**11.** Method according to Claim 10, **characterized in that** a fault signal is output if the secondary air mass flow rate which is determined as an offset exceeds a predefined threshold value.

**12.** Method according to one of Claims 1 to 11, **characterized in that** the intake air mass flow rate ($mass_{intakeair}$) and the air/fuel ratio ($\lambda_{exhgas}$) which is sensed by the probe are determined in a predefinable air mass flow rate and temperature range of the internal combustion engine.

**13.** Method according to Claim 12, **characterized in that** the measured values are low-pass filtered.

**Revendications**

**1.** Procédé de surveillance d'un système d'apport d'air secondaire en association avec le système d'échappement d'un véhicule à moteur, selon lequel on détermine un signal pour le débit d'air secondaire à partir :

- d'un signal pour le débit d'air d'admission ($Masse_{air\ d'admission}$),
- d'un signal pour le rapport du débit d'air d'admission calculé sur le dosage du carburant par unité de temps ($\lambda_{moteur}$),
- d'un signal pour le rapport air/carburant ($\lambda_{gaz\ d'échappement}$), déterminé au moyen d'une sonde, en aval de l'embouchure d'une conduite d'air secondaire dans le canal des gaz d'échappement, l'aptitude au fonctionnement du système d'air secondaire étant appréciée au moyen du signal pour le débit d'air secondaire, et
- comme signal du débit d'air secondaire, on calcule la masse d'air secondaire ($Masse_{air\ secondaire}$) en fonction du rapport du débit d'air d'admission sur le dosage du carburant par unité de temps ($\lambda_{moteur}$) et du rapport air/carburant ($\lambda_{gaz\ d'échappement}$), déterminé au moyen de la sonde, ainsi que du signal pour le débit d'air d'admission ($Masse_{air\ d'admission}$), et l'aptitude au fonctionnement étant appréciée en fonction de cette masse d'air secondaire ($Masse_{air\ secondaire}$),

**caractérisé en ce que**
la masse d'air secondaire est déterminée pendant la phase d'air secondaire, en déterminant la masse réelle d'air secondaire ($Masse_{air\ secondaire\ réelle}$) en fonction d'une grandeur de réglage ($FR_m$) d'un régulateur $\lambda$.

**2.** Procédé selon la revendication 1,
**caractérisé en ce que**

la masse d'air secondaire (Masseair secondaire) est déterminée au moyen d'un calcul selon l'équation suivante :

$$\lambda_{\text{gaz d'échappement}} = \lambda_{\text{moteur}} * (1 + (Masse_{\text{air secondaire}}/Masse_{\text{air d'admission}})).$$

**3.** Procédé selon la revendication 2,
**caractérisé en ce que**
le système d'air secondaire est considéré comme apte à fonctionner lorsque la masse d'air secondaire est supérieure à une valeur seuil prédéterminée.

**4.** Procédé selon la revendication 1,
**caractérisé en ce que**
la masse réelle d'air secondaire (Masse$_{\text{air secondaire réelle}}$) est définie selon l'équation suivante :

$$Masse_{\text{air secondaire réelle}} =$$

$$[(\lambda_{\text{gaz d'échappement}}/\lambda_{\text{gaz échap de cons}} * FR_m) - 1 * Masse_{\text{air d'admission}},$$

avec $\lambda_{\text{gaz}}$ échap de cons représente le rapport air/carburant à régler.

**5.** Procédé selon la revendication 1 ou 4,
**caractérisé en ce que**
lorsque le rapport du débit d'air d'admission sur le dosage du carburant par unité de temps ($\lambda_{\text{moteur}}$) est prédéterminé, on utilise la masse réelle d'air secondaire (Masse$_{\text{air secondaire réelle}}$) pour adapter la masse d'air secondaire de consigne (Masse $_{\text{air secondaire de cons}}$) déterminée à partir d'un modèle.

**6.** Procédé selon la revendication 1,
**caractérisé en ce qu'**
on calcule la masse réelle d'air secondaire (Masse$_{\text{air secondaire réelle}}$) en fonction de la masse d'air secondaire de consigne (Masse$_{\text{air secondaire de cons}}$) à déterminer par le modèle et de la valeur de consigne d'un rapport, déterminé au moyen d'un calcul, du débit d'air d'admission sur le dosage du carburant par unité de temps ($\lambda_{\text{gaz échap de cons}}$), la grandeur de réglage (FR$_m$) étant limitée à 1.

**7.** Procédé selon la revendication 5 ou 6,
**caractérisé en ce qu'**
on calcule la masse réelle d'air secondaire (Masse$_{\text{air secondaire réelle}}$) selon l'équation suivante :

$$Masse_{\text{air secondaire réelle}} = FR_m * 1 / \lambda_{\text{gaz échap de cons}} * (Masse_{\text{air d'admission}} +$$

$$Masse_{\text{air secondaire de cons}}) - Masse_{\text{air d'admission}}.$$

**8.** Procédé selon l'une des revendications 1 à 7,
**caractérisé en ce qu'**
en raccordement avec la phase d'air secondaire, lorsque la soupape d'arrêt de l'air secondaire (122) est fermée et la pompe d'air secondaire (120) est mise sous tension, on détermine au moyen d'un calcul la masse d'air secondaire selon la formule suivante et on apprécie l'aptitude au fonctionnement de la soupape d'arrêt de l'air secondaire (122) au moyen de la masse d'air secondaire ainsi déterminée :

$$Masse_{\text{soupape d'air secondaire}} = Masse_{\text{air d'admission}} * (FR_m - 1).$$

**9.** Procédé selon la revendication 8,
**caractérisé en ce que**
la soupape d'arrêt de l'air secondaire (122) est considérée comme non étanche lorsque la masse d'air secondaire (Masse$_{\text{soupape d'air secondaire}}$) est supérieure à un seuil prédéterminé.

**10.** Procédé selon la revendication 9,
**caractérisé en ce qu'**
en raccordement au contrôle d'étanchéité de la soupape, une définition du décalage des masses d'air secondaire s'effectue de telle sorte que la pompe d'air secondaire (120) est déconnectée et, après un intervalle de temps prédéterminé, la masse d'air secondaire est définie pour être évaluée et considérée comme signal de décalage.

**11.** Procédé selon la revendication 10,
**caractérisé en ce qu'**
un signal d'erreur s'affiche lorsque la masse d'air secondaire déterminée comme décalée est supérieure à une valeur seuil prédéterminée.

**12.** Procédé selon l'une des revendications 1 à 11,
**caractérisé en ce que**
la détermination de la masse d'air d'admission ($Masse_{air\ d'admission}$) et le rapport air/carburant ($\lambda_{gaz\ d'échappement}$) détecté par la sonde s'effectuent dans une plage de masses d'air et de températures du moteur à combustion interne pouvant être prédéterminée.

**13.** Procédé selon la revendication 12,
**caractérisé en ce que**
les valeurs de mesure sont filtrées au travers d'un filtre passe-bas.

Fig.1 (Stand der Technik)

EP 1 204 817 B1

Fig.2

Fig.3